# EUROPEAN PATENT SPECIFICATION

(11) **EP 3 907 167 B1**
(45) Date of publication and mention of the grant of the patent: **11.10.2023**
(21) Application number: 20214582.7
(22) Date of filing: 16.12.2020
(51) Int. Cl.: B66B 3/00

(54) **ELEVATOR SYSTEM DISPLAY THAT PROVIDES DIFFERENT INFORMATION TO DIFFERENT INDIVIDUALS**
AUFZUGSANLAGENANZEIGE ZUR BEREITSTELLUNG VERSCHIEDENER INFORMATIONEN FÜR VERSCHIEDENE PERSONEN
AFFICHAGE DE SYSTÈME D'ASCENSEUR FOURNISSANT DIFFÉRENTES INFORMATIONS À DIFFÉRENTES PERSONNES

(30) Priority: 04.05.2020 US 202016865968
(43) Date of publication of application: 10.11.2021
(73) Proprietor: Otis Elevator Company, Farmington, Connecticut 06032 (US)
(72) Inventor: AUXIER, James Tilsley, Farmington, CT Connecticut 06032 (US); BOGLI, Craig Drew, Farmington, CT Connecticut 06032 (US); TRCKA, Marija, Farmington, CT Connecticut 06032 (US)
(74) Representative: Dehns

(56) References cited:
- WO-A1-2012/124600
- US-A1- 2014 055 349

## Description

### BACKGROUND

Elevator systems have proven useful for carrying passengers between different levels in buildings. Elevator systems traditionally have included hall call buttons that allow an individual to indicate a desire to travel up or down from a current location. A variety of elevator car dispatching algorithms are known for assigning elevator cars to respond to passenger requests made using hall call buttons. Other elevator systems include a destination entry approach that allows passengers to indicate their desired or intended destinations prior to entering an elevator car. Many such systems include a destination entry device, such as a kiosk, through which the passenger indicates the intended destination to the elevator system. An appropriate computing device uses a dispatching control algorithm to assign elevator cars to the different passenger requests.

With destination entry systems, passengers need to board the appropriate elevator car to reach their intended destinations, respectively. There are a variety of ways in which passengers receive that information. It would be useful to provide such information to passengers in a more convenient and economical manner. US2014/0055349A1 discloses a directional display device which causes responses to user actions to be displayed respectively to users. WO2012/124600A1 discloses a multi-view display.

### SUMMARY

According to a first aspect of the present invention, there is provided an elevator system as claimed in claim 1.

In some embodiments, the display has a single screen that simultaneously displays the first passenger information and the second passenger information.

In some embodiments, the display is a parallel reality^{™} display including a plurality of pixels that each are configured to simultaneously emit a plurality of colors.

In some embodiments, the elevator car assigned to carry the first passenger is different from the elevator car assigned to carry the second passenger.

In some embodiments, the elevator car assigned to carry the first passenger is the same as the elevator car assigned to carry the second passenger.

In some embodiments, the first passenger information includes first infotainment content and the second passenger information includes second, different infotainment content.

In some embodiments the elevator system includes a plurality of elevator cars and a lobby where the plurality of passengers can respectively board one of the elevator cars and wherein the display is situated outside of elevator cars.

In some embodiments the elevator system includes a plurality of elevator cars and wherein each of the elevator cars includes the display inside the elevator car.

In some embodiments the elevator system includes at least one location sensor configured to provide an indication of the locations of the plurality of passengers and wherein the processor determines the first viewing direction and the second viewing direction based on the locations of the first passenger and the second passenger, respectively.

In some embodiments, the at least one location sensor includes a camera that detects at least one identifying characteristic of at least one of the plurality of passengers in a field of view of the camera.

In some embodiments, the at least one location sensor includes a wireless communication device that wirelessly communicates with a device carried by at least one of the passengers and provides an indication of the location of the at least one of the passengers based on communications with the device.

According to a second aspect of the present invention, there is provided a method of providing information to elevator passengers as claimed in claim 12.

In some embodiments, the display has a single screen that simultaneously displays the first passenger information and the second passenger information.

In some embodiments, the display is a parallel reality display^{™} including a plurality of pixels that are each configured to simultaneously emit a plurality of colors.

In some embodiments, displaying the first passenger information includes displaying first infotainment content and displaying the second passenger information includes displaying second, different infotainment content.

In some embodiments the method includes situating the display in a lobby where the plurality of passengers can respectively board one of a plurality of elevator cars.

In some embodiments the method includes situating the display inside each of a plurality of elevator cars.

In some embodiments the method includes determining the location of each of the plurality of passengers, determining the first viewing direction based on the determined location of the first passenger, and determining the second viewing direction based on the location of the second passenger.

In some embodiments the method includes displaying, on the display, other information for at least one individual to be visible from a third viewing direction that is different than the first and second viewing directions.

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system.
Figure 2 schematically illustrates selected portions of an example display screen.
Figure 3 is a flowchart diagram summarizing an example method of providing information to elevator passengers.

### DETAILED DESCRIPTION

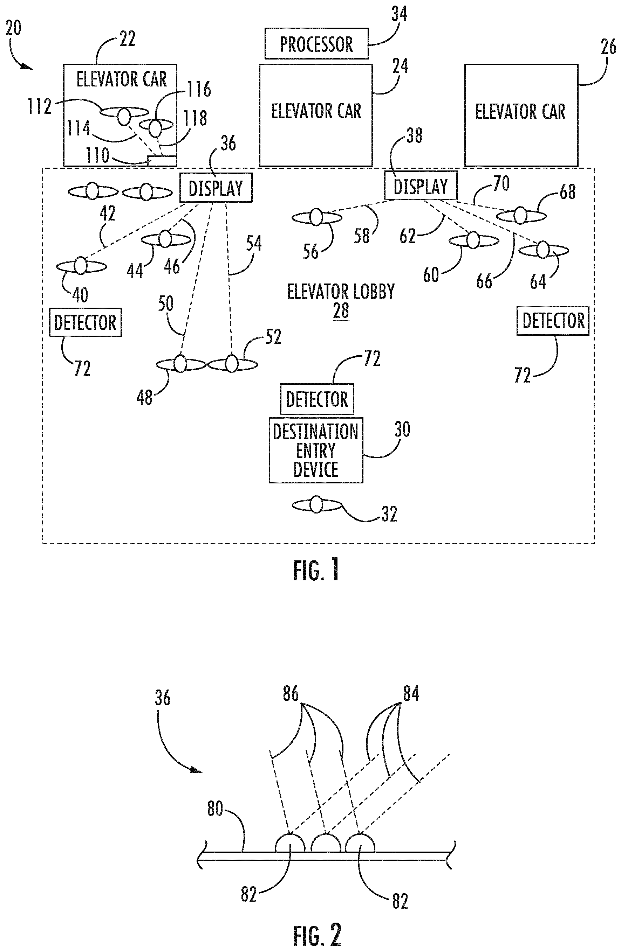

Figure 1 schematically illustrates selected portions of an elevator system 20. A plurality of elevator cars 22, 24 and 26 are accessible from an elevator lobby 28. While three elevator cars 22-26 are illustrated for discussion purposes, elevator systems that are consistent with the described example embodiment may include a different number of elevator cars.

A destination entry device 30 allows passengers, such as a passenger 32, to place a request for elevator service. The destination entry device 30 includes an interface configured to receive input from the passengers indicating at least the intended destination of each passenger. The interface that receives passenger input may take various forms. One example includes a touch screen display that a passenger uses to enter the input. Another example interface is configured to communicate with a mobile station, such as a smart phone, carried by a passenger. In such embodiments, the passenger places a call for elevator service through the mobile station that is wirelessly communicated to the interface.

A processor 34 processes or interprets the information input by the passengers through the interface. The processor 34 includes at least one computing device that is configured to determine passenger information for each passenger based on at least the intended destination of the passenger or some identifier of the passenger. The processor 34 controls displays 36 and 38 to display information for the passengers. One feature of the example embodiment is that the processor 34 controls each display 36, 38 to simultaneously display different passenger information for different passengers.

In Figure 1, the display 36 simultaneously provides visible passenger information to multiple passengers at the same time on a single display screen. First passenger information is visible to a first passenger 40 from a first viewing direction 42. At the same time, second passenger information is visible to a second passenger 44 from a second viewing direction 46. Third passenger information is visible to a third passenger 48 from a third viewing direction 50 and fourth passenger information is provided to a fourth passenger 52 along another, fourth viewing direction 54.

In the example of Figure 1, the display 38 displays at least four different images corresponding to passenger information for different passengers. One passenger 56 sees corresponding passenger information from a viewing direction 58 while another passenger 60 sees different passenger information from a viewing direction 62. The display 38 simultaneously provides different passenger information to another passenger 64 that is visible from a viewing direction 66 and unique passenger information for a passenger 68 that is visible from another viewing direction 70.

The viewing directions 42, 46, 50, 54, 58, 62, 66 and 70 are determined by the processor 34 based on an indication of a location of the corresponding passengers relative to the appropriate display 36, 38. In one embodiment, each display may be capable of displaying any desired amount of different content to any desired number of viewing angles. The elevator system 20 includes at least one location sensor 72 that is configured to provide an indication of the locations of the plurality of passengers in the elevator lobby 28. The processor 34 determines the viewing direction for each passenger based on the passengers' respective locations relative to the display that will show each passenger's respective information. The location sensors 72 in the illustrated example embodiment include cameras that detect at least one identifying characteristic of the passengers, for example when each passenger uses the destination entry device 30. The location sensors 72 provide information to the processor 34 regarding a location of the passenger within the lobby 28. The processor 34 uses such information for purposes of determining which display 36 or 38 is best situated to display a particular passenger's information and the viewing direction of that passenger relative to the corresponding display.

Some example embodiments include location sensors that wirelessly communicate with a device, such as a smartphone, that can be carried by at least some of the passengers. Other location sensors used in some embodiments include optical sensors, cameras, millimeter wave radar detectors, optical time-of-flight sensors or LIDAR detectors. Known location techniques based on wireless communications provide an indication of the location of that passenger relative to a display 36, 38 to allow the processor 34 to determine an appropriate viewing direction from which to make each passenger's information visible on the display.

Determining the viewing angle for each passenger may include tracking the location of each passenger in a vicinity of the displays 36, 38. For example, a passenger is initially identified or tagged when the passenger enters a request or places a call for elevator service. When the passenger uses a mobile station, for example, the location of that mobile station at the time the request is received is determined as an initial location of that passenger. The particular mobile station associated with each request can be tracked using triangulation or other locating techniques useful for locating a mobile station and the tracked position of the mobile station is treated as the location of the passenger who placed the call from that mobile station.

In the scenario in which a passenger enters a destination through a kiosk having a physical interface, such as a touch screen, the kiosk location is the initial location of that passenger. A vision-based detector, such as a camera, captures at least one image of the passenger and associates identifiable characteristics from that image with that passenger. One more cameras or other vision-based detectors in the vicinity of the displays 36, 38 detect the associated identifiable characteristics from captured image data to track or update the location of the passenger.

In some embodiments, a passenger can place a call through a hall call button and the location of the accessed hall call button is considered the location of that passenger for purposes of determining the viewing angle of such a passenger.

Given this description, commercially available location sensors and known locating techniques, those skilled in the art will be able to select appropriate location sensors to provide passenger location information to a processor that controls the contents of a display based on a determined location of a passenger and the corresponding viewing angle.

Figure 2 schematically illustrates a portion of the display 36. In this example, the display 36 has a single display screen 80 that includes a plurality of pixels 82. Each of the pixels 82 is selectively controllable to emit different colors of light in different directions for forming or establishing different displayed information on the display screen 82 depending on the viewing direction from which an individual observes the display screen 80. The pixels 82 are schematically shown emitting light of a first color at 84 in a first direction corresponding to a viewing direction of one of the passengers. A different color of light is schematically shown at 86 emitted from the pixels 82 in a different direction corresponding to a second viewing direction of a second one of the passengers.

In embodiments that include a display like that schematically represented in Figure 2, the display may be referred to as a parallel reality^{™} display because it has the capability of simultaneously displaying different images providing different information visible from different viewing directions, respectively.

In other embodiments, a display, such as the display 36, 38 or both, includes more than one display screen situated for displaying different passenger information to different passengers visible along different viewing directions.

The processor 34 determines the content of the passenger information for each passenger including at least which elevator car is assigned to carry each passenger to the respective intended destination. The first passenger information indicates, for example, the elevator car assigned to carry the first passenger 40 to the intended destination of that passenger and an indication of the expected arrival time or the wait time before the assigned elevator car will arrive at the landing where the first passenger can board the car. The displayed second passenger information indicates the elevator car assigned to carry the second passenger 44 to the intended destination of that passenger along with an indication of the expected arrival time or wait time. The same display 36 may provide the first passenger information and second passenger information regardless of whether the first passenger 40 and second passenger 44 are boarding the same elevator car or different elevator cars. The displays 36 and 38 are not limited to displaying information for passengers boarding the elevator cars 22-26 that are closest to those displays. Instead, the content or images on each display 36-38 is only limited by the particular passenger who has an accessible viewing direction to see information on the display.

The displayed passenger information in some embodiments includes infotainment information. Infotainment includes information, entertainment, or both. Some information is provided to facilitate the passenger using the elevator system, such as directing the passenger to the appropriate elevator car 22-26 in the lobby 28 so the passenger reaches the intended destination after boarding the correct elevator car. Other passenger information includes general passenger information, such as guidance for a path to follow after exiting an elevator car. Some informative passenger information provides details regarding an upcoming appointment or meeting. Other information includes entertainment or other information for the passengers apart from specifics about reaching their destinations. In some embodiments, the passenger information includes advertising or media content that is of interest to or potentially relevant for each passenger based on predetermined passenger profile information. Each passenger's information may include different entertainment content compared to that of other passengers.

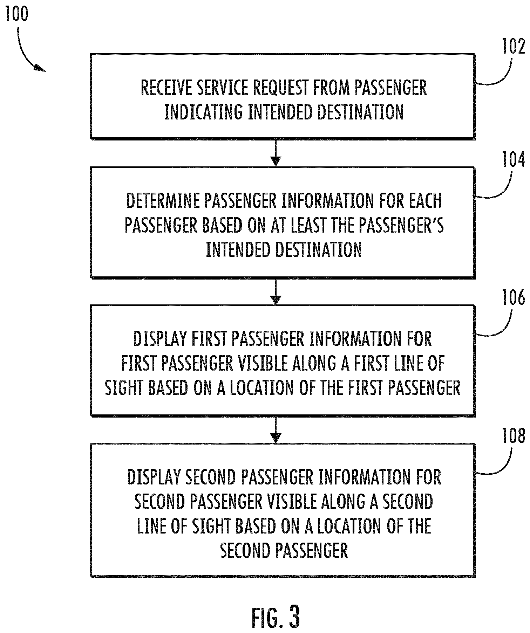

Figure 3 includes a flowchart diagram 100 that summarizes an example technique of providing information to the elevator passengers. Input from each of the plurality of passengers is received at 102 indicating at least the intended destination of each passenger. At 104, passenger information for each of the passengers is determined based on at least the intended destination of each passenger. At 106, at least one of the displays 36, 38 displays first passenger information for the first one of the passengers 40 to be visible from the first viewing direction 42, which is based on the location of the first passenger 40 relative to the display 36 in the scenario illustrated in Figure 1. At 108, the second passenger information is displayed for the second passenger 44 to be visible from the second viewing direction 46, which is based on the location of the second passenger 44 relative to the display 36 in the scenario illustrated in Figure 1. The second passenger information may be different from the first passenger information and the second viewing direction 46 is different than the first viewing direction 42. Both passengers 40 and 44 are able to observe their own passenger information from their corresponding viewing direction 42, 46 simultaneously on the same display 36.

The displays 36 and 38 are situated outside of the elevator cars 22-26 where passengers can observe passenger information while the passengers are in the lobby 28. As shown in Figure 1, the elevator car 22 includes a display 110 that provides first passenger information visible to a first passenger 112 in the elevator car 22. The first passenger 112 views the first passenger information on the display 110 along the viewing direction 114. The processor 34 controls the display 110 to provide visible second passenger information to a second passenger 116 in the elevator car 22 along a second viewing direction 118. This type of arrangement allows for providing additional passenger information to passengers while they are situated in an elevator car to be carried to their intended destinations. Such passenger information may be pertinent to the intended destination, such as a listing of occupants on a particular floor or information that is pertinent to the employees of a business located on a particular floor.

The displays 36, 38, 110 are also capable of providing information to specific individuals who are not passengers and such information can be provided simultaneously with the type of passenger information described above. For example, an elevator system mechanic or technician may see detailed information regarding the operational status or health of the elevator system. A building engineer may see a displayed image indicating details of elevator system efficiencies. Displayed information for a building manager includes information of interest, such as the progress of a work order requesting elevator system repair or maintenance.

Other individuals may obtain information from any of the displays 36, 38, 110, such as firefighters seeing detailed information regarding which building levels include smoke alarms that have been activated or the location of stairways.

The illustrated example embodiment enhances the experience of passengers and other interested individuals by providing visible information to them regarding utilizing the elevator system 20 to reach an intended destination along with other information, such as advertising or entertainment. The example embodiment accomplishes this in an economical and efficient manner by utilizing a single display to provide such information to multiple individuals, simultaneously. The convenience and experiences of the passengers are enhanced because the individuals do not need to look to a mobile device but can observe any nearby display to see relevant information even while that display is providing information to another passenger.

The preceding description is exemplary rather than limiting in nature. Variations and modifications to the disclosed examples may become apparent to those skilled in the art that do not necessarily depart from the scope of this invention. The scope of legal protection given to this invention can only be determined by studying the following claims.

## Claims

1. An elevator system (20), comprising:
a display (36, 38, 110) configured to show a plurality of images that are each visible from a respective viewing direction (42, 46, 50, 54, 58, 62, 66, 70);
an interface (30) configured to receive input from each of a plurality of passengers (32, 40, 44, 48, 52, 56, 60, 64, 68) indicating at least an intended destination of each passenger;
a processor (34) that is configured to:
determine an elevator car (22, 24, 26) assigned to carry each passenger to the respective intended destination;
determine passenger information for each passenger,
cause the display to display first passenger information for a first one of the passengers (32, 40, 44, 48, 52, 56, 60, 64, 68) to be visible from a first viewing direction (42, 46, 50, 54, 58, 62, 66, 70) that is based on a location of the first passenger relative to the display, and
cause the display to display second passenger information for a second one of the passengers (32, 40, 44, 48, 52, 56, 60, 64, 68) to be visible from a second viewing direction (42, 46, 50, 54, 58, 62, 66, 70) that is based on a location of the second passenger relative to the display, wherein the second viewing direction is different than the first viewing direction
**characterized in that**:
the displayed first passenger information indicates the elevator car assigned to carry the first passenger to the intended destination of the first passenger, and
the displayed second passenger information indicates the elevator car assigned to carry the second passenger to the intended destination of the second passenger.

2. The elevator system (20) of claim 1, wherein the display (36, 38, 110) has a single screen that simultaneously displays the first passenger information and the second passenger information.

3. The elevator system (20) of claim 1, wherein the elevator car (22, 24, 26) assigned to carry the first passenger is different from the elevator car assigned to carry the second passenger.

4. The elevator system (20) of claim 1, wherein the elevator car (22, 24, 26) assigned to carry the first passenger is the same as the elevator car assigned to carry the second passenger.

5. The elevator system (20) of claim 1, wherein the first passenger information includes first infotainment content and the second passenger information includes second, different infotainment content.

6. The elevator system (20) of claim 5, comprising a plurality of elevator cars (22, 24, 26) and a lobby (28) where the plurality of passengers (32, 40, 44, 48, 52, 56, 60, 64, 68) can respectively board one of the elevator cars and wherein the display (36, 38) is situated outside of elevator cars.

7. The elevator system (20) of claim 5 or 6, comprising a plurality of elevator cars (22, 24, 26) and wherein each of the elevator cars includes the display (110) inside the elevator car (22).

8. The elevator system (20) of any preceding claim, comprising at least one location sensor (72) configured to provide an indication of the locations of the plurality of passengers (32, 40, 44, 48, 52, 56, 60, 64, 68) and wherein the processor (34) determines the first viewing direction and the second viewing direction based on the locations of the first passenger and the second passenger, respectively.

9. The elevator system (20) of claim 8, wherein the at least one location sensor (72) includes a camera that detects at least one identifying characteristic of at least one of the plurality of passengers (32, 40, 44, 48, 52, 56, 60, 64, 68) in a field of view of the camera.

10. The elevator system (20) of claim 8 or 9, wherein the at least one location sensor (72) includes a wireless communication device that wirelessly communicates with a device carried by at least one of the passengers and provides an indication of the location of the at least one of the passengers based on communications with the device.

11. The elevator system (20) of any preceding claim, wherein the processor (34) is configured to cause the display (36, 38, 110) to display other information for at least one individual to be visible from a third viewing direction that is different than the first and second viewing directions.

12. A method of providing information to elevator passengers, the method comprising:
receiving input from each of a plurality of passengers (32, 40, 44, 48, 52, 56, 60, 64, 68) indicating at least an intended destination of each passenger;
determining an elevator car (22, 24, 26) assigned to carry each passenger to the respective intended destination,
determining passenger information for each of a plurality of passengers;
displaying, on a display (36, 38 110) that is configured to show a plurality of images that are each visible from a respective viewing direction, first passenger information for a first one of the passengers (32, 40, 44, 48, 52, 56, 60, 64, 68) to be visible from a first viewing direction (42, 46, 50, 54, 58, 62, 66, 70) that is based on a location of the first passenger relative to the display (36, 38, 110); and
displaying, on the display, second passenger information for a second one of the passengers (32, 40, 44, 48, 52, 56, 60, 64, 68) to be visible from a second viewing direction (42, 46, 50, 54, 58, 62, 66, 70) that is based on a location of the second passenger relative to the display (36, 38, 110),
wherein the second viewing direction is different than the first viewing direction, and wherein the displayed first passenger information indicates the elevator car assigned to carry the first passenger to the intended destination of the first passenger, and the displayed second passenger information indicates the elevator car assigned to carry the second passenger to the intended destination of the second passenger.

13. The method of claim 12, comprising
determining the location of each of the plurality of passengers (32, 40, 44, 48, 52, 56, 60, 64, 68),
determining the first viewing direction based on the determined location of the first passenger; and
determining the second viewing direction based on the location of the second passenger.

## Patentansprüche

1. Aufzugsanlage (20), umfassend:
eine Anzeige (36, 38, 110), die dazu konfiguriert ist, eine Vielzahl von Bildern zu zeigen, die jeweils aus einer jeweiligen Betrachtungsrichtung (42, 46, 50, 54, 58, 62, 66, 70) sichtbar sind;
eine Schnittstelle (30), die dazu konfiguriert ist, eine Eingabe von jedem einer Vielzahl von Fahrgästen (32, 40, 44, 48, 52, 56, 60, 64, 68) zu empfangen, die mindestens ein beabsichtigtes Ziel jedes Fahrgastes angibt;
einen Prozessor (34), der zu Folgendem konfiguriert ist:
Bestimmen einer Aufzugskabine (22, 24, 26), die zugeordnet ist, um jeden Fahrgast zu dem jeweils beabsichtigten Ziel zu befördern;
Bestimmen von Fahrgastinformationen für jeden Fahrgast, Veranlassen, dass die Anzeige erste Fahrgastinformationen für einen ersten der Fahrgäste (32, 40, 44, 48, 52, 56, 60, 64, 68) anzeigt, sodass sie aus einer ersten Betrachtungsrichtung (42, 46, 50, 54, 58, 62, 66, 70) sichtbar sind, die auf einem Standort des ersten Fahrgastes relativ zu der Anzeige basiert, und
Veranlassen, dass die Anzeige zweite Fahrgastinformationen für einen zweiten der Fahrgäste (32, 40, 44, 48, 52, 56, 60, 64, 68) anzeigt, sodass sie aus einer zweiten Betrachtungsrichtung (42, 46, 50, 54, 58, 62, 66, 70) sichtbar sind, die auf einem Standort des zweiten Fahrgastes relativ zu der Anzeige basiert, wobei sich die zweite Betrachtungsrichtung von der ersten Betrachtungsrichtung unterscheidet,
**dadurch gekennzeichnet, dass**:
die angezeigten ersten Fahrgastinformationen die Aufzugskabine angeben, die zugeordnet ist, um den ersten Fahrgast zu dem beabsichtigten Ziel des ersten Fahrgastes zu befördern, und
die angezeigten zweiten Fahrgastinformationen die Aufzugskabine angeben, die zugeordnet ist, um den zweiten Fahrgast zu dem beabsichtigten Ziel des zweiten Fahrgastes zu befördern.

2. Aufzugsanlage (20) nach Anspruch 1, wobei die Anzeige (36, 38, 110) einen einzigen Bildschirm aufweist, der gleichzeitig die ersten Fahrgastinformationen und die zweiten Fahrgastinformationen anzeigt.

3. Aufzugsanlage (20) nach Anspruch 1, wobei sich die Aufzugskabine (22, 24, 26), die zugeordnet ist, um den ersten Fahrgast zu befördern, von der Aufzugskabine unterscheidet, die zugeordnet ist, um den zweiten Fahrgast zu befördern.

4. Aufzugsanlage (20) nach Anspruch 1, wobei die Aufzugskabine (22, 24, 26), die zugeordnet ist, um den ersten Fahrgast zu befördern, mit der Aufzugskabine identisch ist, die zugeordnet ist, um den zweiten Fahrgast zu befördern.

5. Aufzugsanlage (20) nach Anspruch 1, wobei die ersten Fahrgastinformationen einen ersten Infotainment-Inhalt beinhalten und die zweiten Fahrgastinformationen einen zweiten, unterschiedlichen Infotainment-Inhalt beinhalten.

6. Aufzugsanlage (20) nach Anspruch 5, umfassend eine Vielzahl von Aufzugkabinen (22, 24, 26) und eine Lobby (28), in der die Vielzahl von Fahrgästen (32, 40, 44, 48, 52, 56, 60, 64, 68) jeweils in eine der Aufzugskabinen einsteigen kann und wobei sich die Anzeige (36, 38) außerhalb von Aufzugskabinen befindet.

7. Aufzugsanlage (20) nach Anspruch 5 oder 6, umfassend eine Vielzahl von Aufzugskabinen (22, 24, 26) und wobei jede der Aufzugskabinen die Anzeige (110) innerhalb der Aufzugskabine (22) beinhaltet.

8. Aufzugsanlage (20) nach einem der vorhergehenden Ansprüche, umfassend mindestens einen Standortsensor (72), der dazu konfiguriert ist, eine Angabe der Standorte der Vielzahl von Fahrgästen (32, 40, 44, 48, 52, 56, 60, 64, 68) bereitzustellen, und wobei der Prozessor (34) die erste Betrachtungsrichtung und die zweite Betrachtungsrichtung basierend auf den Standorten des ersten Fahrgastes beziehungsweise des zweiten Fahrgastes bestimmt.

9. Aufzugsanlage (20) nach Anspruch 8, wobei der mindestens eine Standortsensor (72) eine Kamera beinhaltet, die mindestens ein identifizierendes Merkmal von mindestens einem der Vielzahl von Fahrgästen (32, 40, 44, 48, 52, 56, 60, 64, 68) in einem Sichtfeld der Kamera erkennt.

10. Aufzugsanlage (20) nach Anspruch 8 oder 9, wobei der mindestens eine Standortsensor (72) eine drahtlose Kommunikationsvorrichtung beinhaltet, die drahtlos mit einer Vorrichtung kommuniziert, die von mindestens einem der Fahrgäste getragen wird, und eine Angabe des Standorts der Vorrichtung des mindestens einen der Fahrgäste basierend auf einer Kommunikation mit der Vorrichtung bereitstellt.

11. Aufzugsanlage (20) nach einem der vorhergehenden Ansprüche, wobei der Prozessor (34) dazu konfiguriert ist, die Anzeige (36, 38, 110) zu veranlassen, andere Informationen für mindestens eine Person anzuzeigen, sodass sie aus einer dritten Betrachtungsrichtung sichtbar sind, die sich von der ersten und der zweiten Betrachtungsrichtung unterscheidet.

12. Verfahren zum Bereitstellen von Informationen für Aufzugsfahrgäste, wobei das Verfahren Folgendes umfasst:
Empfangen einer Eingabe von jedem einer Vielzahl von Fahrgästen (32, 40, 44, 48, 52, 56, 60, 64, 68), die mindestens ein beabsichtigtes Ziel jedes Fahrgastes angibt;
Bestimmen einer Aufzugskabine (22, 24, 26), die zugeordnet ist, um jeden Fahrgast zu dem jeweils beabsichtigten Ziel zu befördern,
Bestimmen von Fahrgastinformationen für jeden einer Vielzahl von Fahrgästen;
Anzeigen, auf einer Anzeige (36, 38, 110), die dazu konfiguriert ist, eine Vielzahl von Bildern zu zeigen, die jeweils von einer jeweiligen Betrachtungsrichtung sichtbar sind, erster Fahrgastinformationen für einen ersten der Fahrgäste (32, 40, 44, 48, 52, 56, 60, 64, 68), sodass sie aus einer ersten Betrachtungsrichtung (42, 46, 50, 54, 58, 62, 66, 70) sichtbar sind, die auf einem Standort des ersten Fahrgastes relativ zu der Anzeige (36, 38, 110) basiert; und
Anzeigen, auf der Anzeige, zweiter Fahrgastinformationen für einen zweiten der Fahrgäste (32, 40, 44, 48, 52, 56, 60, 64, 68), sodass sie aus einer zweiten Betrachtungsrichtung (42, 46, 50, 54, 58, 62, 66, 70) sichtbar sind, die auf einem Standort des zweiten Fahrgastes relativ zu der Anzeige (36, 38, 110) basiert,
wobei sich die zweite Betrachtungsrichtung von der ersten Betrachtungsrichtung unterscheidet und wobei die angezeigten ersten Fahrgastinformationen die Aufzugskabine angeben, die zugeordnet ist, um den ersten Fahrgast zu dem beabsichtigten Ziel des ersten Fahrgastes zu befördern, und die angezeigten zweiten Fahrgastinformationen die Aufzugskabine angeben, die zugeordnet ist, um den zweiten Fahrgast zu dem beabsichtigten Ziel des zweiten Fahrgastes zu befördern.

13. Verfahren nach Anspruch 12, umfassend:
Bestimmen des Standortes jedes der Vielzahl von Fahrgästen (32, 40, 44, 48, 52, 56, 60, 64, 68),
Bestimmen der ersten Betrachtungsrichtung basierend auf dem bestimmten Standort des ersten Fahrgastes; und
Bestimmen der zweiten Betrachtungsrichtung basierend auf dem Standort des zweiten Fahrgastes.

## Revendications

1. Système d'ascenseur (20) comprenant :
un affichage (36, 38, 110) configuré pour afficher une pluralité d'images qui sont chacune visibles depuis une direction de visualisation respective (42, 46, 50, 54, 58, 62, 66, 70) ;
une interface (30) configurée pour recevoir une saisie de chacun d'une pluralité de passagers (32, 40, 44, 48, 52, 56, 60, 64, 68) indiquant au moins une destination prévue de chaque passager ;
un processeur (34) qui est configuré de sorte à :
déterminer une cabine d'ascenseur (22, 24, 26) affectée pour transporter chaque passager vers la destination prévue respective ;
déterminer les informations de passager pour chaque passager, amener l'affichage à afficher des premières informations de passager à un premier passager (32, 40, 44, 48, 52, 56, 60, 64, 68) pour être visible depuis une première direction de visualisation (42, 46, 50, 54, 58, 62, 66, 70) qui est basée sur un emplacement du premier passager par rapport à l'affichage, et
amener l'affichage à afficher des secondes informations de passager à un second passager (32, 40, 44, 48, 52, 56, 60, 64, 68) pour être visible depuis une deuxième direction de visualisation (42, 46, 50, 54, 58, 62, 66, 70) qui est basée sur un emplacement du second passager par rapport à l'affichage, dans lequel la deuxième direction de visualisation est différente de la première direction de visualisation
**caractérisé en ce que** :
les premières informations de passager affichées indiquent la cabine d'ascenseur affectée pour transporter le premier passager jusqu'à la destination prévue du premier passager, et
les secondes informations de passager affichées indiquent la cabine d'ascenseur affectée pour transporter le second passager jusqu'à la destination prévue du second passager.

2. Système d'ascenseur (20) selon la revendication 1, dans lequel l'affichage (36, 38, 110) a un écran unique qui affiche simultanément les premières informations de passager et les secondes informations de passager.

3. Système d'ascenseur (20) selon la revendication 1, dans lequel la cabine d'ascenseur (22, 24, 26) affectée au transport du premier passager est différente de la cabine d'ascenseur affectée au transport du second passager.

4. Système d'ascenseur (20) selon la revendication 1, dans lequel la cabine d'ascenseur (22, 24, 26) affectée au transport du premier passager est la même cabine d'ascenseur affectée au transport du second passager.

5. Système d'ascenseur (20) selon la revendication 1, dans lequel les premières informations de passager comprennent le premier contenu d'infodivertissement et les secondes informations de passager comprennent un second contenu d'infodivertissement différent.

6. Système d'ascenseur (20) selon la revendication 5, comprenant une pluralité de cabines d'ascenseur (22, 24, 26) et un hall (28) où la pluralité de passagers (32, 40, 44, 48, 52, 56, 60, 64, 68) peuvent respectivement monter à bord d'une des cabines d'ascenseur et dans lequel l'affichage (36, 38) est situé à l'extérieur des cabines d'ascenseur.

7. Système d'ascenseur (20) selon la revendication 5 ou 6, comprenant une pluralité de cabines d'ascenseur (22, 24, 26) et dans lequel chacune des cabines d'ascenseur comporte l'affichage (110) à l'intérieur de la cabine d'ascenseur (22).

8. Système d'ascenseur (20) selon une quelconque revendication précédente, comprenant au moins un capteur d'emplacement (72) configuré pour fournir une indication des emplacements de la pluralité de passagers (32, 40, 44, 48, 52, 56, 60, 64, 68) et dans lequel le processeur (34) détermine la première direction de visualisation et la deuxième direction de visualisation sur la base des emplacements du premier passager et du second passager, respectivement.

9. Système d'ascenseur (20) selon la revendication 8, dans lequel l'au moins un capteur de localisation (72) comporte une caméra qui détecte au moins une caractéristique d'identification d'au moins l'un de la pluralité de passagers (32, 40, 44, 48, 52, 56, 60, 64, 68) dans un champ de vision de la caméra.

10. Système d'ascenseur (20) selon la revendication 8 ou 9, dans lequel l'au moins un capteur d'emplacement (72) comporte un dispositif de communication sans fil qui communique sans fil avec un dispositif porté par au moins l'un des passagers et fournit une indication de l'emplacement de l'au moins un des passagers sur la base des communications avec le dispositif.

11. Système d'ascenseur (20) selon une quelconque revendication précédente, dans lequel le processeur (34) est configuré pour amener l'affichage (36, 38, 110) à afficher d'autres informations pour au moins un individu pour être visible depuis une troisième direction de visualisation qui est différente des première et deuxième directions de visualisation.

12. Procédé de fourniture d'informations aux passagers d'un ascenseur, le procédé comprenant :
la réception de la saisie de chacun des passagers (32, 40, 44, 48, 52, 56, 60, 64, 68) indiquant au moins une destination prévue pour chaque passager ;
la détermination d'une cabine d'ascenseur (22, 24, 26) affectée pour transporter chaque passager vers la destination prévue respective ;
la détermination des informations de passager à chacun de la pluralité de passagers,
l'affichage, sur un affichage (36, 38, 110) qui est configuré pour montrer une pluralité d'images visibles chacune dans une direction respective, des premières informations de passager à un premier passager (32, 40, 44, 48, 52, 56, 60, 64, 68) pour être visible depuis une première direction de visualisation (42, 46, 50, 54, 58, 62, 66, 70) qui est basée sur un emplacement du premier passager par rapport à l'affichage (36, 38, 110) ; et
l'affichage, sur l'écran, des secondes informations de passager à un second passager (32, 40, 44, 48, 52, 56, 60, 64, 68) pour être visible depuis une deuxième direction de visualisation (42, 46, 50, 54, 58, 62, 66, 70) qui est basée sur un emplacement du second passager par rapport à l'affichage (36, 38, 110),
dans lequel la deuxième direction de visualisation est différente de la première direction de visualisation, et dans lequel les premières informations de passager affichées indiquent la cabine d'ascenseur affectée pour transporter le premier passager jusqu'à la destination prévue du premier passager, et les secondes informations de passager affichées indiquent la cabine d'ascenseur affectée pour transporter le second passager jusqu'à la destination prévue du second passager.

13. Procédé selon la revendication 12, comprenant
la détermination de l'emplacement de chacun de la pluralité de passagers (32, 40, 44, 48, 52, 56, 60, 64, 68),
la détermination de la première direction de visualisation sur la base de l'emplacement déterminé du premier passager ; et
la détermination de la deuxième direction de visualisation sur la base de l'emplacement déterminé du second passager.
